# EUROPEAN PATENT APPLICATION

(11) **EP 0 556 534 A1**
(43) Date of publication of application: **25.08.1993**
(21) Application number: 92830065.6
(22) Date of filing: 18.02.1992
(51) Int. Cl.: B65H 19/18

(54) **DEVICE FOR JOINING STRIPS OF FILM OF WELDABLE MATERIAL, WITH MEANS OF SECURE RETENTION OF THE LEADING END OF THE FILM TO BE WELDED**

(71) Applicant: GARIBALDO RICCIARELLI S.r.l., I-51100 Pistoia (IT)
(72) Inventor: Brunini, Pietro Paolo, I-51100 Pistoia (IT); Mangani, Alberto, I-51100 Pistoia (IT)
(74) Representative: Mannucci, Gianfranco, Dott.-Ing.

(57) **Abstract**

A description is given of a device for joining strips of film of weldable material, comprising a bar (41) for the transverse welding and cutting of the two strips (N) to be welded and a counter-bar (49) capable of co-operating with the said bar to perform the welding and cutting; the bar is movable so that it may be brought from an inactive position to an active position of co-operation with the said counter-bar, the said bar and the said counter-bar comprising means of cutting and welding the strips. On the bar (41) there is disposed a means of retention (53) of the leading end of the reserve strip to be welded to the trailing end of the strip which is being used up.

## Description

The invention relates to a device for joining strips of film of weldable material, comprising a bar for the transverse welding and cutting of the two strips to be welded and a counter-bar capable of co-operating with the said bar to perform the welding and cutting, the bar being movable so that it may be brought from an inactive position to an active position of co-operation with the said counter-bar, the said bar and the said counter-bar comprising means of cutting and welding the strips transversely.

A device of this type is described and illustrated in Italian Patent Application No. 9416 A/90 and in European Patent Application EP-A-0,464,003, the contents of which are incorporated in the present description.

The two cited patent applications describe a device in which the joining of the trailing end of the strip which is being used up, taken from a feed reel, to the leading end of the strip on a reserve reel takes place automatically. This is made possible partly by the presence of two independent positions for the operating reel and for the reserve reel. In a device of this type the reserve reel may be positioned a long time before it is actually used. Since the welding of the two strips must take place in such a way that the strip being used up is perfectly aligned laterally with the new strip and in such a way that the printed matter present on the two strips is in phase after joining, it is particularly important that the front edge, in other words the leading end of the strip from the reserve reel, may be positioned in a precise way and kept in this position in a secure way even for long periods, and in particular for the whole of the time required for using up the reel in operation.

The invention proposes a particular device for the retention of the free edge of the strip on the reserve reel.

The device according to the invention is substantially characterised by the fact that on the bar there is disposed a means of retention of the leading end of the new weldable film strip to be welded to the trailing end of the strip being used up, this means of retention comprising a rod extending at least over a section of the bar and connected to the bar in such a way that it can oscillate about an axis which is eccentric with respect to the axis of the rod. By making the rod oscillate about the axis of oscillation it is possible to force the said rod against the bar, thus retaining the front edge of the strip, which remains gripped between the rod and the bar. The rod may advantageously extend along the whole length of the bar, thus enabling strips of any width to be retained by manoeuvring a single retaining member.

The retention position of the rod may be determined by a fixed stop. Elastic pressure members may be applied to the rod; when the rod is moved to the retention position, they will be pressed between the rod and the surface of the bar, exerting an elastic pressure on the retained film. These elastic means may advantageously consist of O-rings threaded on the rod and uniformly distributed along the longitudinal extension of the rod.

The drawing shows a possible embodiment of the invention, and, in particular,
Fig. 1 is a schematic side view, with parts removed, of a machine for the production of bags made of strips of weldable material and for the filling of the said bags with loose material, to which the improvement of the present invention may be applied;
Fig. 2 is a longitudinal section of the area of the joining of the strip or film of plastic material with the details omitted from the diagram in Fig. 1;
Fig. 3 is a front view of the bar and counter-bar with the means of retention according to the invention; and
Fig. 4 is a transverse section through IV-IV in Fig. 3.

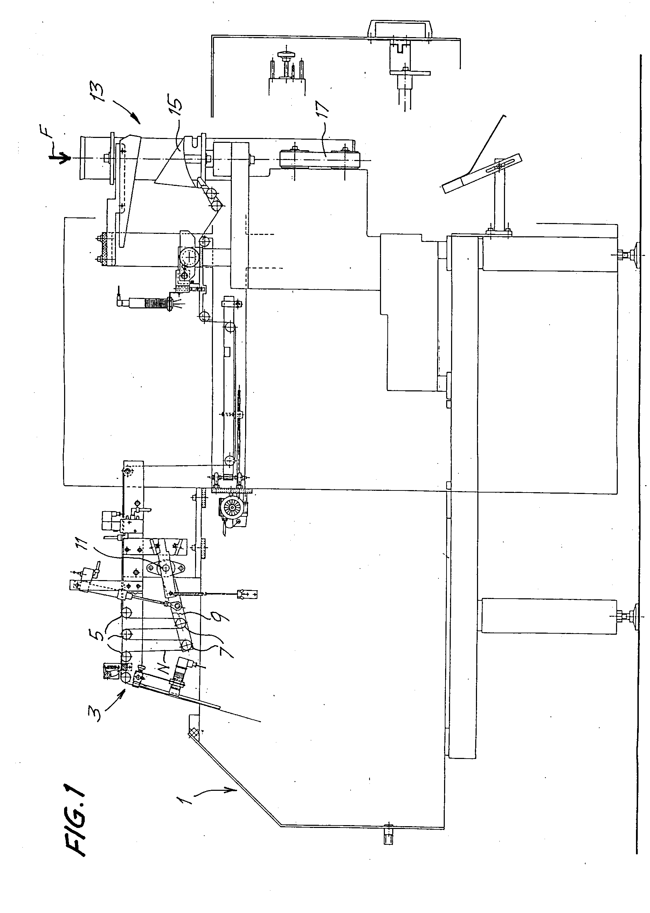

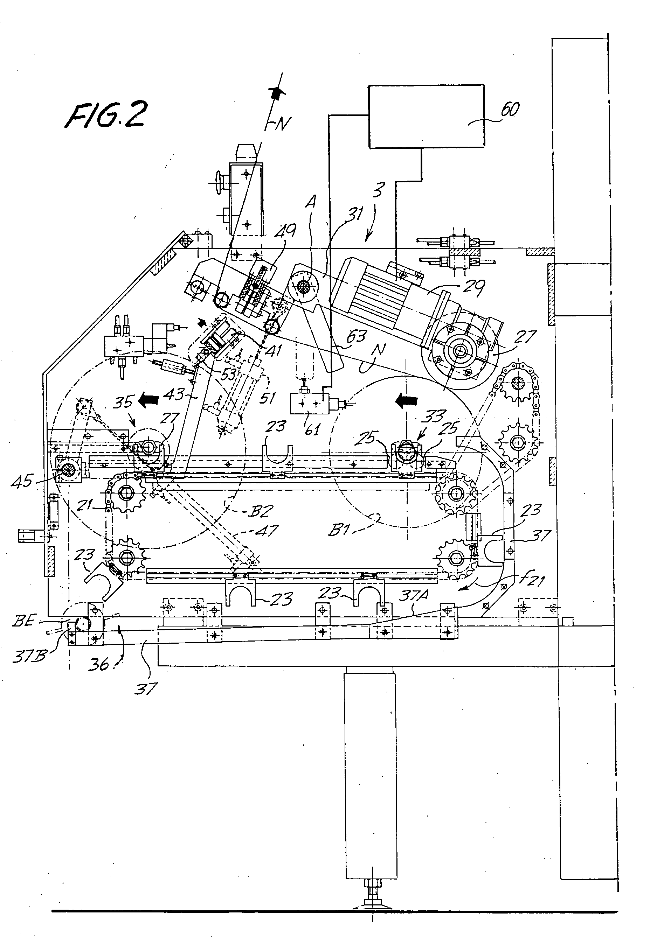

According to what is indicated in a general way in the diagram in Fig. 1, the machine has a first section, indicated as a whole by 1, which contains the operating and reserve reels, together with the means for cutting and welding the strips to weld the trailing end of the strip being used up to the leading end of the strip on the reserve reel. The details of this part of the machine are illustrated in the enlarged section in Fig. 2 and are omitted in the diagram in Fig. 1 for greater clarity. Above section 1 there is provided a section 3 comprising an accordion fold of the strip N formed by a first set of fixed return rollers 5 and by a second set of movable return rollers 7 mounted on an arm 9 which oscillates about a pivot point 11. The accordion fold in section 3 enables the strip N to be fed to the subsequent station of forming, filling and closing of the bag without causing tension in the strip, thus substantially disconnecting the means of traction of the strip in the bag-forming section from the means of unwinding of the feed strip reel.

13 indicates as a whole a section for forming the bag, and for filling and welding it. Section 13 is of a type known in itself and will not, therefore, be described in greater detail. In the drawing, F indicates only the direction of feed of the loose material for the filling of the bag and 15 indicates the collar enabling the strip N to be shaped to form the bag which is filled with loose material, for example a food product, and drawn downwards by a system of belts 17. Section 13 also comprises the pincers, not visible in the diagram in Fig. 1, for welding and cutting the filled bags.

Fig. 2 shows an enlargement of section 1. 21 indicates a chain conveyor on which are mounted at regular intervals means of support 23, on which rest the strip reels N. Of course, two parallel conveyors 21 are provided within section 1, one on each side of the machine, and the corresponding means of support 23 receive the corresponding ends of the centre or core on which are wound the reels of material in strip form N.

As may be seen in Fig. 2, the conveyor enables a first reel B₁ to be positioned in a first operating position - indicated by 33 - in which the reel rests, by means of the projecting ends of the core on which the strip N is wound, on free-running rollers 25 which enable the reel to be unwound easily. The reel which is in this position is in contact with an unwinding cylinder 27, which may advantageously be rubber-coated, driven by an unwinding motor 29 carried by a moving element 31 pivoted so that it can oscillate about a horizontal axis A which is transverse with respect to the direction of advance of the strip N. The roller 27 is kept in contact with the cylindrical surface of the reel B₁ by the intrinsic weight of the motor 29 and of the moving element 31. The rotating of the cylinder 27 by the action of the motor 29 causes the gradual unwinding of the reel B₁ and the feeding of the strip N to the means of production, filling and sealing of the bags.

The conveyor 21 also enables a second reel B₂, also indicated as a spare or reserve reel, to be positioned in a waiting position, indicated by 35. Positions 33 and 35 are substantially aligned on the upper frame of the conveyor 21.

When the reel B₂ in position 33 has been used up and the trailing end of the strip N that is being unwound from the said reel has been welded to the leading end of the strip on reel B₂, by the procedures described in Patent Application EP-A-0,464,003, the conveyor 21 proceeds, by a movement in the direction f21, to move the empty reel from the upper frame to the lower frame of the conveyor 21. On this lower frame there is provided a discharge position 36 of the empty reel, indicated by BE in the figure. Along the extension of the descending frame and of the lower horizontal frame of the conveyor 21 there is provided a guide 37 which enables the empty reel to be retained in its means of support 23 until it reaches an inclined section 37A of the guide. When the means of support 23 carrying the empty reel arrives above the inclined portion 37A of the guide 37, the empty reel BE is released onto this portion of the guide and rolls towards a stop 37B located at the bottom of the guide 37. From this position the empty reel may be removed manually.

Fig. 2 also shows the system for welding the strips from the reels B₁ and B₂. This system includes, as described previously in European Patent Application EP-A-0,464,003, a bar 41 carried by an oscillating arm 43 hinged at 45 to the frame of the machine. A cylinder and piston system 47 actuates the oscillation of the arm 43 and consequently of the bar 41 into the active position illustrated in Fig. 2. In this position the bar 41 is ready to co-operate with a counter-bar 49 which may be brought in front of the bar 41 by means of a cylinder and piston system 51. The counter-bar 49 has inside it a cutting blade (not illustrated in detail in the drawing) which may be made to emerge to penetrate into a corresponding groove in the bar 41. On one side of the cutting blade there is disposed a welding bar to weld the trailing end of the strip from the reel B, to the leading end of the strip from the reel B₂.

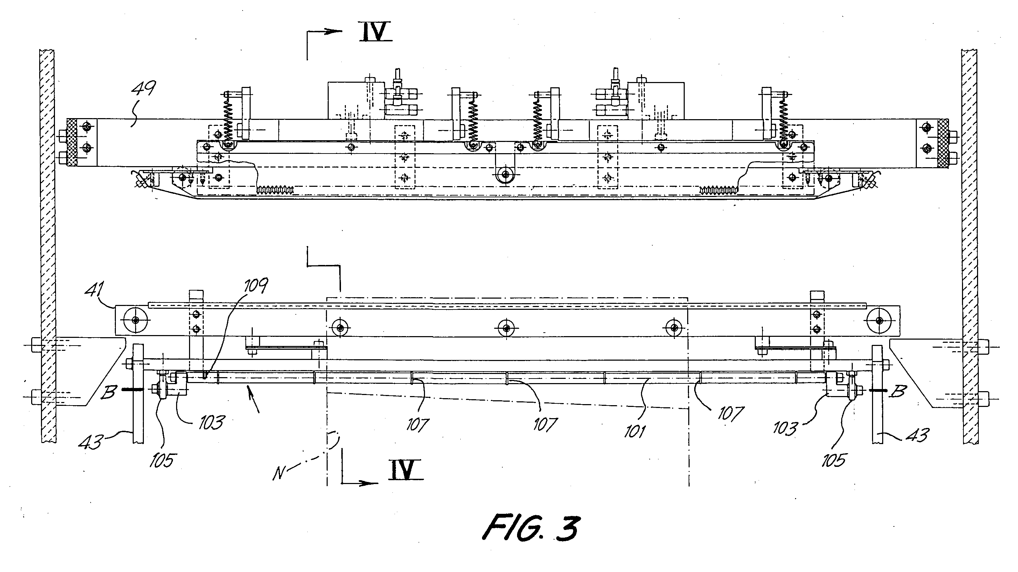

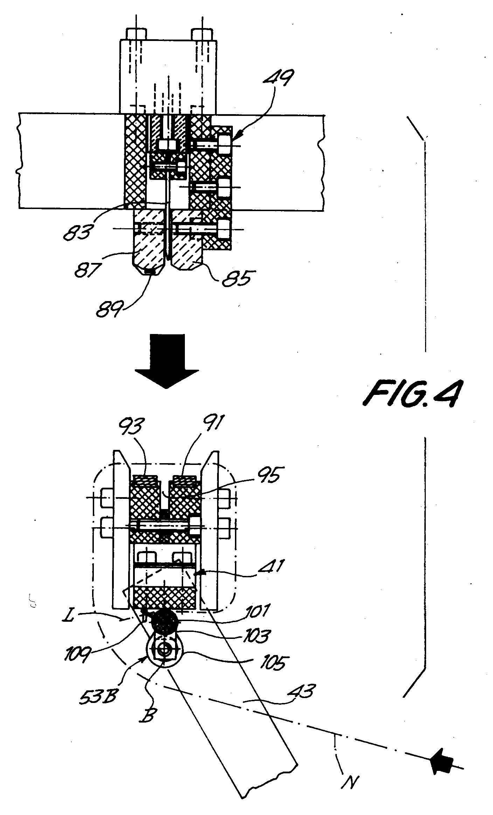

When the reel B₂ is in the waiting position and the reel B₁ is supplying the strip to the machine for the production of the bags - in other words, when the machine is in the state illustrated in Fig. 2 - the free edge, in other words the leading edge of the strip wound on the reel B₂, is retained on the bar 41 by means of a mechanical retention system indicated as a whole by 53 and described in greater detail below with reference to Figs. 3 and 4.

When the reel B₁ has been nearly used up, the strip supplied from the said reel must be welded to the leading end of the strip from reel B₂, positioned on the bar 41. The operation of joining the two strips is controlled by a central control unit, schematically indicated by 60, which receives a signal according to the diameter reached by the reel B₁. The sensing means comprises a microswitch 61 fixed with respect to the frame of the machine and designed to cooperate with a projection 63 fixed to the moving element 31 which carries the motor 29 unwinding the reel B₁ and which is hinged about the pivot A of the machine frame.

Figs. 3 and 4 show the detail of the bar and of the counter-bar with the associated system of retaining the front edge of the reserve strip. The members for the transverse welding and cutting of the bar and counter-bar are known in themselves and are therefore described here in very summary form only. The counter-bar 49 has a cutting blade 83 housed in a longitudinal slot between two transverse retaining members 85 and 87. The retaining member 87 is equipped with a heating bar 89 which, by heat pulses or by another known technique, performs the welding of the strip being used up to the strip on the reserve reel B₂. Two milled bars 91 and 93, designed to co-operate with the retaining projections 85 and 87 disposed on the counter-bar 49, are provided on the bar 41. A longitudinal slot 95, into which the cutter 83 penetrates during the cutting of the strips, is provided between the two milled bars 91 and 93.

For the retention of the front edge L of the reserve strip N, there is provided a rod 101 which extends parallel to the bar 41 and is hinged to this bar about an axis B-B which is eccentric with respect to the axis of the rod 101. The hinged coupling is provided by two bracket members 103 for supporting the rod 101 and for hinged coupling, which are supported by supports 105 integral with the bar 41. On the rod 101 there are threaded O-rings 107 uniformly distributed along the longitudinal extension of the rod 101. A pin 109, forming a stop for the rod 101 in the retaining position, is integral with the bar 41.

The retention position may be seen in particular in Fig. 4. In this position the free edge L of the reserve strip is retained against the surface of the bar 41 by means of the O-rings threaded on the rod 101 when this rod is made to rotate about the axis B-B until it strikes the stop pin 109. To release the edge L it is sufficient to rotate the rod 101 about the axis B-B in a clockwise direction to remove it from the contact surface of the bar 41.

The retention device formed in this way is very simple and easy to operate and enables a strip N of any width to be retained against the bar 41 without the necessity of any adaptation and without the necessity of using suction systems or similar, which have the disadvantage of a high power consumption, especially when, as in the present case, the retention has to be maintained for relatively long periods.

## Claims

1. Device for joining strips of film of weldable material, comprising a bar for the transverse welding and cutting of the two strips to be welded and a counter-bar capable of cooperating with the said bar to perform the welding and cutting, the bar being movable so that it may be brought from an inactive position to an active position of cooperation with the said counter- bar, the said bar and the said counter-bar comprising means of cutting and welding the strips, characterised in that on the said bar there is disposed a means of retention of the leading end of the reserve strip to be welded to the trailing end of the strip being used up, this means of retention comprising a rod extending at least over a section of the bar and connected to the said bar in such a way that it can oscillate about an axis which is eccentric with respect to the axis of the rod.

2. Device according to Claim 1, characterised in that the said rod extends along the whole length of the bar.

3. Device according to Claim 1 or 2, characterised in that a stop for the said rod, determining the strip retention position, is disposed on the said bar.

4. Device according to one or more of the preceding claims, characterised in that elastic pressure means, capable of pressing on the strip when the retention means is in the closed position, are applied to the said rod.

5. Device according to Claim 4, characterised in that the said elastic means consist of O-rings threaded on the said rod.
